# EUROPEAN PATENT APPLICATION

(11) **EP 4 834 846 A1**
(43) Date of publication of application: **04.11.2026**
(21) Application number: 24912662.4
(22) Date of filing: 20.12.2024
(51) Int. Cl.: C01F 11/18, C04B 14/28, C04B 22/10, C04B 28/00

(54) **CALCIUM-BASED CARBONATE COMPOUND AND INORGANIC MOLDED BODY**

(30) Priority: 26.12.2023 JP 2023218807; 17.12.2024 JP 2024220578
(71) Applicant: Konoshima Chemical Co., Ltd., Osaka-shi, Osaka 541-0042 (JP)
(72) Inventor: MATSUI, Seiji, Mitoyo-shi, Kagawa 769-1103 (JP); UCHIDA, Yuto, Mitoyo-shi, Kagawa 769-1103 (JP)
(74) Representative: Parker, Andrew James
(86) International application number: PCT/JP2024/045176
(87) International publication number: WO 2025/142773

(57) **Abstract**

Provided are a calcium-based carbonate compound capable of improving the strength of a molded body while maintaining the fluidity of the mixture in the production process, and an inorganic molded body. The cube-shaped calcium-based carbonate compound has a phosphorus atom content of 1,000 ppm or less and a sulfur atom content of 100 ppm or more. The calcium-based carbonate compound preferably has an average particle diameter measured by a laser diffraction method of 2 µm or more and 25 µm or less. A BET specific surface area of the calcium-based carbonate compound is preferably 0.3 m²/g or more and 3 m²/g or less.

## Description

### TECHNICAL FIELD

The present invention relates to a calcium-based carbonate compound and an inorganic molded body.

### BACKGROUND ART

The inorganic molded body is a molded body mainly composed of an inorganic substance such as a hydraulic material and a siliceous material, and has characteristics such as fire resistance, light weight, high strength and workability, and therefore is widely used for an outer wall material of a house and the like, a roof base material, an eave soffit material, and the like. In addition, the inorganic molded body is widely used for foundation parts, walls, columns, floors, and the like of buildings for which strength and fire resistance are required.

As a technique for enhancing strength which is one of important performances required for an inorganic molded body, a technique of blending needle-shaped calcium carbonate has been proposed (JP-B-6898926).

### PRIOR ART DOCUMENT

### PATENT DOCUMENT

Patent Document 1: JP-B-6898926

### SUMMARY OF THE INVENTION

### PROBLEMS TO BE SOLVED BY THE INVENTION

However, the strength of the inorganic molded body obtained even by the above technique may be reduced. In addition, the fluidity of a mixture of raw materials during the manufacturing process may be reduced, so that the working efficiency in the entire manufacturing step may be reduced.

An object of the present invention is to provide a calcium-based carbonate compound capable of improving the strength of the molded body while maintaining the fluidity of the mixture during the manufacturing process, and an inorganic molded body.

### MEANS FOR SOLVING THE PROBLEMS

As a result of intensive studies, the present inventors have found that the above problem can be solved by the following configuration, and has completed the present invention.

The present invention relates to, in one embodiment,
a cube-shaped calcium-based carbonate compound, having:
a phosphorus atom content of 1,000 ppm or less; and
a sulfur atom content of 100 ppm or more.

As a result of studies by the present inventors, it has been newly found, as factors in formation of needle-like or rod-like crystals (hereinafter also referred to as "formation of needle-like crystals and the like") having a high aspect ratio during crystal growth of a calcium-based carbonate compound, that phosphorus atoms act as one factor in promotion of formation of needle-like crystals and the like, and sulfur atoms act as one factor in inhibiting formation of needle-like crystals and the like. In the calcium-based carbonate compound, since the contents of phosphorus atoms and sulfur atoms are in specific ranges, the shape can be efficiently regulated to a cubic shape.

On the other hand, in the field of inorganic molded bodies, it is widely known to increase strength of an inorganic molded body using a needle-shaped or fibrous reinforcing material such as needle-shaped calcium carbonate.

However, when the blending amount of a needle-shaped reinforcing material is increased in order to further improve the strength, the fluidity of the mixture is reduced as described above, and thus the improvement of the strength and the maintenance of the fluidity are in a so-called trade-off relationship.

As a result of repeated studies by the present inventors, it has been surprisingly found that a cube-shaped calcium-based carbonate compound can improve the strength of an inorganic molded body to be obtained while maintaining the fluidity of the mixture during the manufacturing process.

The present invention has been completed by developing these novel findings.

The reason why the calcium-based carbonate compound can achieve both fluidity and strength is not clear, but is presumed as follows. Since the calcium-based carbonate compound has a cube shape, the shear stress in the mixture is reduced, and the viscosity increasing action is smaller than that of a needle-shaped material. As a result, the fluidity of the mixture can be maintained.

In addition, improvement of the strength and density of the calcium-based carbonate compound itself due to the cube shape, homogeneous dispersion or homogeneous filling due to isotropy (non-orientation) in the mixture, and the like can improve the strength of an inorganic molded body. Furthermore, the viscosity of the mixture containing a needle-shaped material is so high that air bubbles in the mixture are hardly released. When a final product is obtained in which air bubbles remain, the strength of the final product may be reduced.

In the case of a cube-shaped calcium-based carbonate compound, it is presumed that air bubbles in the mixture are likely to be released due to fluidity, isotropy, and the like as described above, and thus the strength can be prevented from being reduced, or improved also in this respect.

In the present specification, the "cube-shape" is not limited to the normal cube-shape, and refers to a shape that can be regarded as a cube approximately. For example, even when one or more vertices of a cube are rounded or missing, the shape is cubic when the cube can be restored by complementing these parts. When the length of one side of the target shape is within a range of 50% or more and 150% or less of the length of the other side, the target shape is a cube-shape.

Furthermore, the shape of one surface of the target shape is not limited to a square, and may be any of a trapezoid, a rhombus, a quadrangle having different lengths of four sides, and the like as long as the length ratio of the two sides is satisfied. In addition, all particles composing the calcium-based carbonate compound do not need to have a cube-shape, and when the proportion of cube-shaped particles in all the particles is the largest, the calcium-based carbonate compound has a cube-shape.

In the present specification, the "calcium-based carbonate compound" is a compound containing calcium carbonate as a main component, and is a concept that allows inclusion or coexistence of other subcomponents that can be incorporated in the manufacturing process and the like. The content of calcium carbonate in the calcium-based carbonate compound is preferably 90 mass% or more. As the method for measuring the content ratio of calcium carbonate in the calcium-based carbonate compound, a disodium ethylenediaminetetraacetate titration method can be suitably employed.

### <Disodium ethylenediaminetetraacetate titration method>

The calcium-based carbonate compound (dried at 105°C for 2 hours) as a sample is weighed in an amount of 1 g, followed by suspension in 50 mL of water. To the suspension, 10 mL of hydrochloric acid (liquid obtained by mixing concentrated hydrochloric acid and water at a volume ratio of 1 : 1) is added, followed by heating for dissolution. After cooling, the solution is transferred to a 250 mL volumetric flask, followed by addition of water to make up to the mark volume. From this, an aliquot of 5.00 mL is taken, followed by addition of water such that the total amount of the liquid is about 50 mL. To this is added 5 mL of a buffer solution (a solution prepared by dissolving 500 g of potassium hydroxide in water to make up to 1,000 mL), followed by further addition of a commercially available diluted powder of DOTITE NN for titration with a titration reagent (a solution prepared by dissolving about 3.8 g of disodium ethylenediaminetetraacetate in water to make up to 1,000 mL). The titration is ended at the time when the color of the liquid changes from red to blue. The content (%) of calcium carbonate is calculated by the following formula. [Formula 1] ${CaCO}_{3} \left(%\right) = \frac{0.00100089 \times f \times V}{W} \times 100$ (In the formula, f is a factor of the titration reagent. The factor is determined by titration with the titration reagent using a BT indicator. V is the consumption (mL) of the titration reagent. W is the collected amount of the sample (0.02 g of calcium-based carbonate compound).)

In an embodiment, the calcium-based carbonate compound preferably has an average particle diameter measured by a laser diffraction method of 2 µm or more and 25 µm or less. In an embodiment, the calcium-based carbonate compound preferably has a BET specific surface area of 0.3 m²/g or more and 3 m²/g or less. In an embodiment, the calcium-based carbonate compound preferably has an apparent specific gravity of 1 g/mL or more and 2 g/mL or less. By satisfying these characteristics alone or in combination, both fluidity and strength can be exhibited at a higher level.

In an embodiment, according to the calcium-based carbonate compound, the P funnel-flowing down time can be 7 seconds or more and 10 seconds or less. Thus, the calcium-based carbonate compound can exhibit good fluidity.

In an embodiment, the content of magnesium in the calcium-based carbonate compound may be 1,000 ppm or more. The content of magnesium in the calcium-based carbonate compound varies depending on the raw material, the production method, and the like. For example, when a raw material (seawater or the like) relatively rich in magnesium is used, the content of magnesium in the calcium-based carbonate compound is 1,000 ppm or more. When a raw material (such as a supernatant of concrete sludge or the like) containing a relatively low amount of magnesium is used, the content of magnesium in the calcium-based carbonate compound is less than 1,000 ppm.

In an embodiment, the calcium-based carbonate compound is preferably a synthetic calcium-based carbonate compound from the viewpoint of production efficiency and shape controllability.

The present invention relates to, in another embodiment,
an inorganic molded body containing the calcium-based carbonate compound.

By applying the cube-shaped calcium-based carbonate compound to an inorganic molded body, it is possible to efficiently obtain an inorganic molded body having high strength while maintaining favorable workability and maintaining fluidity during the manufacturing process.

### BRIEF DESCRIPTION OF THE DRAWINGS

FIG. 1 is an SEM photograph of a calcium-based carbonate compound of Example 1-1 of the present invention.
FIG. 2 is an SEM photograph of a calcium-based carbonate compound of Comparative Example 1-1 of the present invention.

### MODE FOR CARRYING OUT THE INVENTION

Hereinafter, a description is made of a calcium-based carbonate compound and an inorganic molded body according to an embodiment of the present invention. The present invention is not limited to these embodiments.

### <Calcium-based carbonate compound>

The calcium-based carbonate compound according to the present embodiment has a cubic shape. In the calcium-based carbonate compound, the phosphorus atom content is 1,000 ppm or less, and the sulfur atom content is 100 ppm or more.

In the calcium-based carbonate compound, the phosphorus atom content is not particularly limited as long as the phosphorus atom content is 1,000 ppm or less. The phosphorus atom content is preferably 500 ppm or less, more preferably 100 ppm or less. On the other hand, the phosphorus atom content is preferably as low as possible, but the phosphorus atom content may be about 1 ppm. By setting the phosphorus atom content, which is one factor in formation of needle-like crystals and the like of the calcium-based carbonate compound, to the predetermined amount, a cube-shaped calcium-based carbonate compound can be efficiently formed.

In the calcium-based carbonate compound, the sulfur atom content is not particularly limited as long as the sulfur atom content is 100 ppm or more. The content is preferably 500 ppm or more, more preferably 1,000 ppm or more. The sulfur atom content is preferably 10,000 ppm or less, more preferably 5,000 ppm or less. By setting the sulfur atom content to the predetermined amount, an effect of inhibiting formation of needle-like crystals and the like can be exerted, and a cube-shaped calcium-based carbonate compound can be efficiently obtained.

The average particle diameter of the calcium-based carbonate compound measured by a laser diffraction method is preferably 2 µm or more and 25 µm or less, more preferably 4 µm or more and 22 µm or less, still more preferably 6 µm or more and 18 µm or less. This makes it possible to suitably maintain the fluidity of a mixture containing the calcium-based carbonate compound. In addition, this makes it possible to further improve the strength of the obtained inorganic molded body.

The BET specific surface area of the calcium-based carbonate compound is preferably 0.3 m²/g or more and 3 m²/g or less, more preferably 0.4 m²/g or more and 2.6 m²/g or less, still more preferably 0.5 m²/g or more and 2.4 m²/g or less. This makes it possible to suitably maintain the fluidity of a mixture containing the calcium-based carbonate compound, and also to improve the dispersibility of the calcium-based carbonate compound. In addition, this makes it possible to further improve the strength of the obtained inorganic molded body.

The apparent specific gravity of the calcium-based carbonate compound is preferably 1.00 g/mL or more and 2.00 g/mL or less, more preferably 1.05 g/mL or more and 1.80 g/mL or less, still more preferably 1.10 g/mL or more and 1.60 g/mL or less. This makes it possible to suitably maintain the fluidity of a mixture containing the calcium-based carbonate compound. In addition, this makes it possible to increase the density and strength of the calcium-based carbonate compound, and further improve the strength of the obtained inorganic molded body.

The P funnel-flowing down time for the calcium-based carbonate compound is preferably 7 seconds or more and 10 seconds or less, more preferably 7.5 seconds or more and 9.8 seconds or less, still more preferably 8 seconds or more and 9.5 seconds or less. Since the calcium-based carbonate compound has a cube-shape, excellent fluidity can be exhibited.

The content of magnesium in the calcium-based carbonate compound may be 1,000 ppm or more, 5,000 ppm or more, or 10,000 ppm or more. The upper limit of the content of magnesium is about 50,000 ppm depending on the raw material, the production method, and the like.

As the crystal structure of the calcium-based carbonate compound, a calcite type, an aragonite type, or a combination thereof can be suitably employed. From the viewpoint of obtaining a cube-shaped calcium-based carbonate compound, it is preferable that the ratio of calcite type crystal structure be relatively large and the ratio of aragonite type crystal structure be relatively small.

In an X-ray diffraction measurement of the calcium-based carbonate compound, the ratio Iₐ/I_{c} of the peak intensity Iₐ of aragonite to the peak intensity I_{c} of calcite is preferably 0.1 or less, more preferably 0.08 or less, still more preferably 0.06 or less. This makes it possible to efficiently obtain a cube-shaped calcium-based carbonate compound.

The calcium-based carbonate compound is preferably a synthetic calcium-based carbonate compound from the viewpoint of production efficiency and shape controllability.

### (Method for manufacturing calcium-based carbonate compound)

The method for manufacturing the calcium-based carbonate compound is not particularly limited, and a known manufacturing method can be employed. Typically, a solution method for manufacturing a calcium-based carbonate compound by bringing a carbonate salt (carbonate ion) into contact with calcium (calcium ion) such as in seawater to perform salt exchange can be suitably employed.

Ca²⁺ + CO₃²⁻ → CaCO₃ (A)

As the salt of the carbonate ion used in the reaction formula (A), an alkali metal salt (Li, Na, K) or an alkaline earth metal salt (Mg, Sr, excluding Ca) is used, and among them, an alkali metal salt is suitably used. Among them, a Na salt (sodium carbonate) is preferable in terms of versatility and cost.

The contact between the carbonate salt and seawater or the like may be performed by charging an aqueous solution, slurry or the like of the carbonate salt into seawater or the like, or by charging seawater or the like into an aqueous solution, slurry or the like. The charge is preferably performed at one time from the viewpoint of efficiently obtaining a target cube-shaped calcium-based carbonate compound.

The seawater may be pumped as it is from the sea nearby, or may be subjected to a treatment such as filtration before use. The pumping may be performed not only in the near sea but also in any place as long as seawater is obtained. A seawater rich in calcium generated when magnesium hydroxide is removed from seawater may be used.

The amount of the carbonate salt to be charged is not particularly limited as long as the amount of carbonate ions required for the reaction with the amount of calcium ions in seawater or the like is obtained according to the reaction formula (A). The amount of calcium ions and the amount of carbonate ions are preferably equimolar, but the amount of carbonate ions may be within a range of ± 50 % to 200 % in terms of molar ratio with respect to the amount of calcium ions.

The salt exchange reaction through contact between the carbonate salt and seawater or the like proceeds relatively quickly. The reaction time may be adjusted to such an extent that the salt exchange reaction sufficiently proceeds, and can be adjusted to 1 second or more, preferably 1 minute or more and 60 minutes or less, more preferably 5 minutes or more and 50 minutes or less.

The produced calcium-based carbonate compound may be collected by filtration and dried to form a powder, or may be used as a calcium-based carbonate compound source in a slurry or cake form without undergoing collection by filtration and drying.

### <Application of calcium-based carbonate compound>

The applications of the calcium-based carbonate compound are not particularly limited. As applications, for example, the calcium-based carbonate compound is suitable as a functionality enhancing material for an inorganic molded body typified by a building material and a building, a filler for a resin, and the like. Hereinafter, a description is made of an aspect in which the calcium-based carbonate compound is used for an inorganic molded body.

### <Inorganic molded body>

The inorganic molded body is not particularly limited, and typical examples thereof include molded plates for building materials and concrete buildings (concrete molded bodies). Hereinafter, a detailed description is made of applicable compositions and the like depending on applications.

### (Molded plate for building material)

The molded plate preferably contains a hydraulic material, a siliceous material, a reinforcing fiber material, and a calcium-based carbonate compound.

### (Hydraulic material)

Examples of the hydraulic material include cementitious materials, gypsum, lime, slag, and the like. The cementitious materials include commonly used cements such as ordinary Portland cement, early-strength cement, medium heat cement, fly ash cement, blast furnace slag cement, and alumina cement. Examples of the gypsum include anhydrous gypsum, hemihydrate gypsum, and dihydrate gypsum. Examples of the slag include blast furnace slag and converter slag. These hydraulic materials can be used alone or in combination of two or more thereof.

The content of the hydraulic material is preferably 5 mass% or more and 45 mass% or less, more preferably 8 mass% or more and 42 mass% or less, still more preferably 10 mass% or more and 40 mass% or less, based on the total amount of the materials constituting the formed plate. Adjusting the content of the hydraulic material within the above range can improve physical properties such as bending strength and peeling strength of the formed plate, and can suppress an increase in bulk specific gravity of the formed plate and enhance workability at the time of construction, and the like.

### (Siliceous material)

Examples of the siliceous material include materials containing a large amount of SiO₂, such as quartz sand, quartz powder, silica fume, fly ash, diatomaceous earth, layered silicate (e.g. mica, talc, kaolin, bentonite), wollastonite, and lightweight aggregate (for example, fly ash balloon, pearlite, shirasu balloon, glass foam, and the like). These siliceous materials can be used alone or in combination of two or more thereof. Talc, mica, and wollastonite can also be used as a reinforcing fiber material described later.

The content of the siliceous material is preferably 10 mass% or more and 55 mass% or less, more preferably 12 mass% or more and 50 mass% or less, still more preferably 15 mass% or more and 45 mass% or less, based on the total amount of the materials constituting the formed plate. When the content of the siliceous material is within the above range, the bending strength, bulk specific gravity, water absorption rate, dimensional stability, and the like of the formed plate can be adjusted within a desired range.

Note that when a lightweight aggregate having a unit volume mass of 0.5 g/cm³ or less such as pearlite, fly ash balloon, or shirasu balloon is blended as the siliceous material, in order to prevent the bulk specific gravity from becoming too light and the strength such as bending strength and peeling strength from becoming weak, it is preferable to use another siliceous material in combination such that the content of the lightweight aggregate is 20 mass% or less based on the total amount of the materials constituting the formed plate.

### (Reinforcing fiber material)

As the reinforcing fiber material, for example, pulps such as softwood pulp, hardwood pulp, pulp obtained by fibrillating these pulps, and pulp obtained by defibrating waste paper, organic reinforcing fiber materials such as vinylon fiber, acrylonitrile fiber, and polypropylene fiber, and inorganic reinforcing fiber materials such as rock wool and glass fiber can be used. These reinforcing fiber materials can be used alone or in combination of two or more thereof.

In order to improve the strength of and impart toughness to the formed plate, the content of the reinforcing fiber material is preferably 2 mass% or more and 30 mass% or less, more preferably 3 mass% or more and 26 mass% or less, still more preferably 4 mass% or more and 22 mass% or less, based on the total amount of the materials constituting the formed plate. Adjusting the content of the reinforcing fiber material within the above range can suppress protrusion of fibers on the surface of the formed plate and improve smoothness while exhibiting a sufficient reinforcing effect. When an inorganic reinforcing fiber material having an average length of 1 mm to 50 mm is blended as the reinforcing fiber material, in order to improve the smoothness of the formed plate, it is preferable to use another reinforcing fiber material in combination such that the content is 10 mass% or less based on the total amount of the materials constituting the formed plate.

### (Calcium-based carbonate compound)

As the calcium-based carbonate compound, the calcium-based carbonate compound described above can be suitably employed.

The content of calcium-based carbonate compound is preferably 5 mass% or more and 60 mass% or less, more preferably 8 mass% or more and 55 mass% or less, still more preferably 12 mass% or more and 50 mass% or less, based on the total amount of the materials constituting the formed plate. Blending calcium-based carbonate compound having low thermal conductivity in the content within the above range can improve the strength and fire resistance of the formed plate.

### (Optional components)

In order to impart various functions to the formed plate, in addition to the above materials, various materials such as a resin hollow body, wood pieces, wood powder, resin powder, an antifoaming agent, a coagulant, a water repellent, a thickener (methyl cellulose, hydroxyethyl methyl cellulose, hydroxypropyl methyl cellulose, and the like), and a dispersant can be blended depending on the purpose. In addition, it is also possible to appropriately add a recycled material obtained by grinding an end material or the like generated when processing the formed plate.

The bulk density of the formed plate is preferably 0.7 g/cm³ or more and 2.0 g/cm³ or less, more preferably 0.8 g/cm³ or more and 1.8 g/cm³ or less, still more preferably 0.9 g/cm³ or more and 1.6 g/cm³ or less.

### (Method for producing formed plate)

The method for producing the formed plate according to the present embodiment is not particularly limited, and commonly used papermaking methods, extrusion molding methods, flow-on forming methods, cast molding methods, press (compression) molding, and the like can be used. The formed plate can be obtained by subjecting a green sheet formed by these methods to a pattern forming process performed by press dehydration, embossing, or the like, followed by curing such as normal temperature curing, steam curing, or autoclave curing. Furthermore, drying is performed, and shape processing or coating may be performed as necessary.

### (Application of formed plate)

The application of the formed plate is not particularly limited, and the formed plate can be suitably used as performance maintaining materials, for example, interior and exterior finishing materials such as a building wall material, a floor material, a roof material, various boards, an external decorative member, and a fitting, sealing materials, heat insulating materials, sound absorbing materials, and waterproof materials. The formed plate is preferably a cementitious formed plate containing a cementitious material, and more preferably a calcium silicate formed article.

### (Concrete building)

The concrete building is composed of a cured product of a hydraulic composition. The hydraulic composition consists of, in addition to the calcium-based carbonate compound, a powder including at least one of blast furnace slag, an expansive additive, slaked lime, quicklime, fly ash, and Portland cement. As the calcium-based carbonate compound, the calcium-based carbonate compound described above can be suitably employed.

In addition to the hydraulic composition, an aggregate such as sand or gravel, a chemical agent such as a chemical admixture for concrete, a fiber material made of metal or a polymer material, or the like may be blended to provide a hydraulic composition mixed material.

The cured product of the hydraulic composition is obtained by curing a paste obtained by kneading water with the hydraulic composition. The cured product of the hydraulic composition mixed material, which is obtained by curing a kneaded product (corresponding to fresh mortar or fresh concrete) obtained by kneading water with the hydraulic composition mixed material, corresponds to mortar or concrete.

The ratio of the calcium-based carbonate compound in the powder (the ratio of the calcium-based carbonate compound to cement) is in a range of 1 mass% to 60 mass%, preferably in a range of 3 mass% to 50 mass%, more preferably in a range of 5 mass% to 40 mass%.

As the blast furnace slag, it is desirable to use a blast furnace slag fine powder for use in JIS (Japanese Industrial Standards) R5211 "Blast-Furnace Cement" or a blast furnace slag fine powder conforming to JIS A6206 "Blast-Furnace Slag for Concrete". In addition, it is desirable to use a blast furnace slag having a specific surface area of 2,000 to 10,000 cm²/g, preferably 3,500 to 7,000 cm²/g.

As the expansive additive, for example, an expansive additive defined in JIS A6202 "Expansive Additive for Concrete" may be used. It is desirable that the expansive additive be added in a ratio of 2 to 9 mass% with respect to the whole hydraulic composition.

As the slaked lime, for example, one defined in JIS R9001 "Industrial Lime" may be used. In addition, since quicklime becomes slaked lime upon coming into contact with water, for example, quicklime defined in JIS R9001 "Industrial Lime" can be used instead of slaked lime. In this case, it is sufficient to correct the amount of water required to change quicklime to slaked lime.

As the fly ash, for example, one conforming to JIS A6201 "Fly Ash for Use in Concrete" may be used.

As the Portland cement, ordinary Portland cement is used, and in addition, as the Portland cement, high-early-strength Portland cement, ultra-high-early strength Portland cement, moderate heat Portland cement, low heat Portland cement, sulfate resistant Portland cement, and those defined in JIS R5210 "Portland Cement" and JIS R5214 "Ecocement" can also be used.

When Portland cement is contained in the hydraulic composition, the ratio of Portland cement in the powder other than the calcium-based carbonate compound is sufficiently 70 mass% or less, preferably 30 mass% or less.

When Portland cement and blast furnace slag or fly ash are used, for example, JIS R5211 "blast furnace cement" or, for example, JIS R5213 "fly ash cement" in which these Portland cement and blast furnace slag or fly ash components are mixed in advance may be used alone or in combination.

Since the calcium-based carbonate compound having the above characteristics is used, the hydraulic composition and the hydraulic composition mixed material exhibit good fluidity, and their concrete cured product can exhibit excellent compressive strength.

The density of the concrete building is preferably 0.7 g/cm³ or more and 2.0 g/cm³ or less, more preferably 0.8 g/cm³ or more and 1.8 g/cm³ or less, still more preferably 0.9 g/cm³ or more and 1.6 g/cm³ or less.

### EXAMPLES

Hereinafter, a detailed description is made of the present invention with reference to Examples, but the present invention is not limited to the following Examples as long as the present invention does not exceed the gist of the present invention. Measurement and evaluation of physical properties and the like were performed as follows.

### <Evaluation of calcium-based carbonate compound>

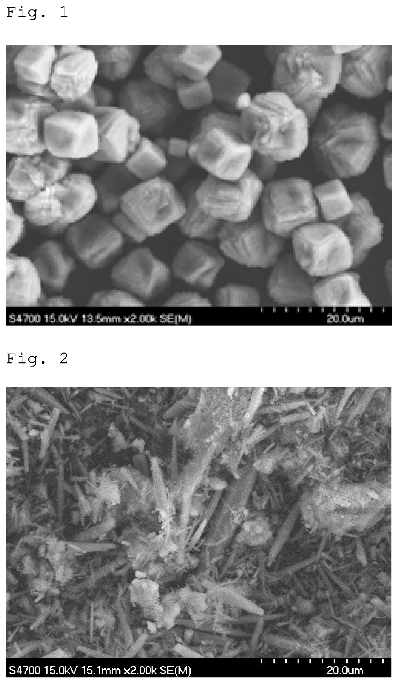

The calcium-based carbonate compounds and the like obtained in Production Examples were subjected to the following analysis. The analysis results are shown in Table 1 and Figs. 1 and 2.

### (1) BET specific surface area

The BET specific surface area (m²/g) of a sample powder pretreated at about 130°C for about 30 minutes in a nitrogen gas atmosphere using an 8-unit preheat unit (manufactured by MOUNTECH) was measured by a nitrogen gas adsorption method using Macsorb HM Model-1208 (manufactured by MOUNTECH) as a BET specific surface area measuring apparatus.

### (2) Average particle diameter measured by laser diffraction method

In a 100 mL volume beaker, 50 mL of ethanol was placed, and into the 100 mL volume beaker, about 0.2 g of the sample powder was put, followed by ultrasonic treatment (UD-201 manufactured by Tomy Seiko Co., Ltd.) for 3 minutes to prepare a dispersion. For the dispersion, the volume-based D₅₀ value was measured using a laser diffraction method-particle size distribution meter (Microtrac HRA Model 9320-X100 manufactured by Nikkiso Co., Ltd.) as the average particle diameter (µm).

### (3) Apparent specific gravity

The apparent specific gravity of the sample powder was measured in accordance with JIS K6220.

### (4) Content of phosphorus atom, sulfur atom, and magnesium atom

### <ICP-AES method>

The calcium-based carbonate compound as a sample was weighed in an amount of 0.2 g, followed by wetting with water. To the wetted compound, 10 mL of hydrochloric acid (liquid obtained by mixing concentrated hydrochloric acid and water at a volume ratio of 1 : 1) was added with a dispenser, followed by heating for dissolution. After cooling, the solution was transferred to a 250 mL volumetric flask, followed by addition of water to make up to the mark of 250 mL volume. From this, an aliquot of 20 mL was taken into a 50 mL volumetric flask, followed by addition of water to make up to the mark of 50 mL to obtain a specimen solution for measurement.

On the other hand, aliquots of 20 mL were taken from the 250 mL made-up aqueous solution into 50 mL volumetric flasks, followed by each arbitrary additional addition of a standard solution of each element (phosphorus atom, sulfur atom, and magnesium atom) to prepare standard solutions for calibration curves having different concentrations. As the standard solution of each element, a standard solution for atomic absorption at 1,000 ppm (commercially available) was used.

The standard solutions for calibration curves to which each element was additionally added having different concentrations and the specimen solution for measurement were set in an automatic sampler of an inductively coupled plasma atomic emission spectrometer (ICP-AES) ("SPECTROBLUE FMS36" manufactured by Hitachi High-Tech Science Corporation) to measure the amount (ppm) of magnesium atoms under the following conditions.

### <Measurement conditions>

High frequency output: 1.4 kW
Carrier gas (humidification) flow rate: 0.9 L/min
Plasma gas flow rate: 13.0 L/min
Auxiliary gas flow rate; 1.0 L/min
Liquid property: aqueous solution
Number of times of integration: 3 times
Sample order: per sample
Measuring method: standard addition method
Weighting of calibration curve: none
Measuring wavelength: phosphorus atom 177.495 nm, sulfur atom 182.034 nm, magnesium atom 279.553 nm

### (5) Calculation of ratio of 46° (aragonite) peak intensity Iₐ to 29° (calcite) peak intensity I_{c} in XRD measurement

The sample powder was pressure-adhered to a predetermined sample stage with a spatula, followed by measurement using an XRD apparatus (MiniFlex 600-C manufactured by Rigaku Corporation) to perform identification analysis as a crystalline material. In the measurement angle 2θ, the peak appearing at about 29° is the main peak of calcite, and the peak appearing at about 46° is the main peak of aragonite. From this, the ratio (Iₐ/I_{c}) of 46° (aragonite) peak intensity Iₐ to 29° (calcite) peak intensity I_{c} was determined.

### (6) Scanning electron microscope observation

A double-sided tape was attached onto an aluminum sample stage, and on the tape the sample powder was applied by tracing with a spatula. After platinum vapor deposition was performed, a particle image of the sample powder was photographed at a magnification of 2000 using a scanning electron microscope (FE-SEM: S-4700 manufactured by Hitachi, Ltd.). Figs. 1 to 2 show SEM photographs.

### <Manufacture of calcium-based carbonate compound>

### [Example 1-1] Calcium-based carbonate compound (cube-shaped)

Into a 220 L volume SUS container with a baffle plate in which 100 L of water was placed in advance, 8,510 g of a reagent of sodium carbonate (manufactured by Wako Pure Chemical Industries, Ltd.: purity 99.8%) was charged under stirring to prepare an aqueous solution of sodium carbonate. On the other hand, 1,000 L of seawater (Ca²⁺ content: 0.25 g/dL) from which magnesium hydroxide had been removed discharged in Konoshima Chemical Co., Ltd. was placed in a 2,000 L volume polyethylene container, followed by addition of 100 L of the aqueous solution of sodium carbonate all at once under stirring at 25°C. Subsequently, the mixture was reacted through continuous stirring for about 30 minutes, and then filtered. The solid content was washed with water in an amount about 5 times the solid content, followed by drying at 110°C for 24 hours and pulverization to obtain a sample powder of a calcium-based carbonate compound.

### [Example 1-2] Calcium-based carbonate compound (cube-shaped)

A sample powder of a calcium-based carbonate compound was obtained by performing the same operation as in Example 1-1 except that 12.7 kg of magnesium chloride hexahydrate was added to 1,000 L of seawater from which magnesium hydroxide had been removed under stirring, followed by addition of 100 L of the aqueous solution of sodium carbonate at once.

### [Example 1-3] Calcium-based carbonate compound (cube-shaped)

To 100 L of seawater from which magnesium hydroxide had been removed, 10 L of the aqueous solution of sodium carbonate was added at once under stirring, followed by continuous stirring for about 30 minutes. To the post-reaction liquid as a seed, 100 L of seawater from which magnesium hydroxide had been removed was further added, and 10 L of the aqueous solution of sodium carbonate was added at once under stirring, followed by continuous stirring for about 30 minutes. This series of operations was continued a total of 10 times. Other than those, the same operation as in Example 1-1 was performed to obtain a sample powder of a calcium-based carbonate compound.

### [Comparative example 1-1] Calcium-based carbonate compound (needle-shaped)

Into a 220 L volume SUS container with a baffle plate in which 180 L of water was placed in advance, 6980 g of commercially available slaked lime powder (manufactured by Yoshimi Lime Industry Co., Ltd., top-quality industrial slaked lime) in terms of CaO, 630 g of aragonite seed crystal powder, and 3000 g of disodium hydrogen phosphate 12-hydrate were each charged under stirring to prepare a mixed slurry of raw materials. Thereafter, the temperature was raised to 70°C, and under that temperature, stirring was performed at a rotation speed of 150 rpm using a stirrer equipped with one stage of turbine blades. An exhaust gas extraction pipe was connected to an exhaust outlet of a steam production boiler using LNG as a fuel. Then, the CO₂ concentration was measured with a CO₂ concentration measuring device (XP-3140 manufactured by New Cosmos Electric Co., Ltd.) while the exhaust gas was drawn using a test blower. As a result, the CO₂ concentration was 10 vol%. The exhaust gas was introduced into the 220 L volume SUS container at a speed of 100 L/min using a test blower and reacted for 7 hours. Thereafter, the mixture was filtered, washed with water having a volume of about 5 times the solid content, and dried and ground at 110°C for 24 hours to yield a sample powder of a calcium-based carbonate compound.

**[Table 1]**

| | Example 1-1 | Example 1-2 | Example 1-3 | Comparative Example 1-1 |
|---|---|---|---|---|
| Calcium-based carbonate compound | Cubic | Cubic | Cubic | Needle-like |
| BET specific surface area (m²/g) | 0.5 | 2.8 | 0.3 | 13.7 |
| Average particle diameter (µm) | 10.5 | 2.2 | 24.6 | 4.1 |
| Apparent specific gravity (g/mL) | 1.23 | 1.01 | 1.92 | 0.56 |
| Phosphorus atom content (ppm) | 10 | 10 | 20 | 20300 |
| Sulfur atom content (ppm) | 3730 | 11580 | 120 | 200 |
| Magnesium atom content (ppm) | 15500 | 16200 | 13050 | 2300 |
| XRD measurement 46° (aragonite)/ 29° (calcite) ratio (Ia/Ic) | 0/116414=0 | 0/68257=0 | 0/232855=0 | 15128/14386=1.05 |

### <Evaluation>

Using the obtained calcium-based carbonate compounds, measurement of the P funnel-flowing down time, production of a cement molded body, and a compressive strength test were performed. The results are shown in Table 3.

### <P funnel-flowing down time>

### (Preparation of Cement Milk 1)

Into 1600 mL of water, 2 kg of cement ("Ordinary Portland Cement (N)" manufactured by Tokuyama Corporation) was charged in about 20 seconds, followed by mixing with a stirrer ("Labo Stirrer (LR500B)" manufactured by Yamato Scientific Co., Ltd.) for 3 minutes from the start of the charging. After stirring was stopped and the mixture was allowed to stand for 3 minutes, the mixture was manually stirred 10 times with a stirring rod ("Stirring Rod (manufactured by POM) φ10 × 300 mm" manufactured by AS ONE Corporation) to create Cement Milk 1.

### (Preparation of Cement Milk 2 to 7)

Calcium-based carbonate compounds of Example 1-1 and Comparative Example 1-1 with the type and amount shown in the following Table 2-1 was charged into 1600 mL of water, followed by manual stirring with the stirring rod for about 30 seconds. Subsequently, the solution was stirred at 400 rpm using the stirrer to yield a mixture. Into the mixture, 2 kg of cement ("Ordinary Portland Cement (N)" manufactured by Tokuyama Corporation) was charged in about 20 seconds, followed by mixing with the stirrer for 3 minutes from the start of the charging. After stirring was stopped and the mixture was allowed to stand for 3 minutes, the mixture was manually stirred 10 times with the stirring rod to create Cement Milk 2 to 7.

**[Table 2-1]**

| Test specimen | | Cement Milk 1 | Cement Milk 2 | Cement Milk 3 | Cement Milk 4 | Cement Milk 5 | Cement Milk 6 | Cement Milk 7 |
|---|---|---|---|---|---|---|---|---|
| Calcium-based carbonate compound | | - | Example 1-1 | Example 1-1 | Example 1-1 | Comparative Example 1-1 | Comparative Example 1-1 | Comparative Example 1-1 |
| Cement | | 2 kg | 2 kg | 2 kg | 2 kg | 2 kg | 2 kg | 2 kg |
| Calcium -based carbonate compound | Cubic | - | 100 g | 200 g | 400 g | - | - | - |
| | Needle -like | - | - | - | - | 100 g | 200 g | 400 g |
| Water | | 1600 mL | 1600 mL | 1600 mL | 1600 mL | 1600 mL | 1600 mL | 1600 mL |

### (Creation of cement milk 8 to 10)

Cement milk 8 to 10 was created by performing the same operation as in the creation of cement milk 2 to 7 except that the calcium-based carbonate compound of Example 1-2 with the type and amount shown in Table 2-2 below was used.

**[Table 2-2]**

| Test specimen | | Cement Milk 8 | Cement Milk 9 | Cement Milk 10 |
|---|---|---|---|---|
| Calcium-based carbonate compound | | Example 1-2 | Example 1-2 | Example 1-2 |
| Cement | | 2 kg | 2 kg | 2 kg |
| Calcium-based carbonate compound | Cubic | 100 g | 200 g | 400 g |
| Water | | 1600 mL | 1600 mL | 1600 mL |

### (Creation of cement milk 11 to 13)

Cement milk 11 to 13 was created by performing the same operation as in the creation of cement milk 2 to 7 except that the calcium-based carbonate compound of Example 1-3 with the type and amount shown in Table 2-3 below was used.

**[Table 2-3]**

| Test specimen | | Cement Milk 11 | Cement Milk 12 | Cement Milk 13 |
|---|---|---|---|---|
| Calcium-based carbonate compound | | Example 1-3 | Example 1-3 | Example 1-3 |
| Cement | | 2 kg | 2 kg | 2 kg |
| Calcium-based carbonate compound | Cubic | 100 g | 200 g | 400 g |
| Water | | 1600 mL | 1600 mL | 1600 mL |

### (P funnel-flowing down time test method)

The P funnel-flowing down time was measured in accordance with "Method for Testing Flowability of Injection Mortar of Prepacked Concrete (Method Using P Funnel)" (JSCE-F521-1999). The discharge port of the P funnel was pressed with a finger, and each prepared cement milk was poured to the marked line of the P funnel (1750 mL). At the same time that the finger was released, measurement was started with a time watch to determine the time until the cement milk was discharged from the P funnel.

### <Production of cement formed article>

### [Example 2-1]

To the marked line of a cylindrical polyethylene bag (diameter of about 50 mm × length of about 550 mm × thickness of about 0.05 mm), 400 mL of the prepared Cement Milk 1 was poured. Air was injected as much as possible to seal the bag, and then the bag was suspended in a thermostat set at 22°C. By leaving the Cement Milk 1 suspended in a thermostat for 28 days and curing the contents, 3 cement formed articles were produced in total. The obtained cement formed articles had a cylindrical shape, a diameter of about 5 cm, and a length of about 20 cm.

### [Examples 2-2 to 2-9 and Comparative Examples 2-1 to 2-4]

Cement formed articles were produced in the same manner as in Example 2-1 except that cement milks shown in the following Tables 3-1 to 3-3 were used.

### (Density)

The density was measured in accordance with JIS A 5430:2008 (Apparent Density Test).

### (Compressive strength test)

The compressive strength of the obtained cement formed article was measured in accordance with JIS A 1108:2018 (Concrete Compressive Test Method).

**[Table 3-1]**

| | Comparative Example 2-1 | Example 2-1 | Example 2-2 | Example 2-3 | Comparative Example 2-2 | Comparative Example 2-3 | Comparative Example 2-4 |
|---|---|---|---|---|---|---|---|
| Calcium-based carbonate compound | - | Cubic | | | Needle-like | | |
| Cement milk used | Cement Milk 1 | Cement Milk 2 | Cement Milk 3 | Cement Milk 4 | Cement Milk 5 | Cement Milk 6 | Cement Milk 7 |
| P funnel-flowing down time (sec) | 8.2 | 9.0 | 8.9 | 9.3 | 9.0 | 10.3 | 27.5 |
| Density (g/cm³) | 1.37 | 1.42 | 1.45 | 1.35 | 1.34 | 1.27 | 1.22 |
| Compressive strength (N/mm²) | 31.1 | 35.7 | 31.4 | 35.2 | 27.4 | 22.6 | 23.4 |

**[Table 3-2]**

| | Example 2-4 | Example 2-5 | Example 2-6 |
|---|---|---|---|
| Calcium-based carbonate compound | Cubic | | |
| Cement milk used | Cement Milk 8 | Cement Milk 9 | Cement Milk 10 |
| P funnel-flowing down time (sec) | 9.4 | 9.7 | 10.0 |
| Density (g/cm³) | 1.31 | 1.36 | 1.37 |
| Compressive strength (N/mm²) | 32.1 | 31.8 | 32.2 |

**[Table 3-3]**

| | Example 2-7 | Example 2-8 | Example 2-9 |
|---|---|---|---|
| Calcium-based carbonate compound | Cubic | | |
| Cement milk used | Cement Milk 11 | Cement Milk 12 | Cement Milk 13 |
| P funnel-flowing down time (sec) | 8.3 | 8.5 | 8.7 |
| Density (g/cm³) | 1.40 | 1.42 | 1.44 |
| Compressive strength (N/mm²) | 35.9 | 36.2 | 36.3 |

Even when the content of the calcium-based carbonate compound was increased, the cement milk obtained by using the calcium-based carbonate compounds of Examples did not cause a significant increase in P funnel-flowing down time, and had good fluidity, as compared with Comparative Example 2-1 in which the calcium-based carbonate compound was not blended. On the other hand, for Comparative Examples 2-2 to 2-4, as the content of calcium-based carbonate compound was increased, the fluidity was significantly reduced.

Furthermore, for the cement molded bodies of Examples in which the calcium-based carbonate compound was blended, the compressive strength was improved as compared with Comparative Example 2-1. On the other hand, for Comparative Examples 2-2 to 2-4, even when calcium-based carbonate compounds were blended, the compressive strength was reduced as compared with blank Comparative Example 2-1. The reason why the compressive strength is reduced for Comparative Examples 2-2 to 2-4 compared with the blank is not clear, but it is presumed that this is because the calcium-based carbonate compound has a needle-shape and the surface energy is increased to cause agglomeration, so that the reinforcing action is reduced, and the viscosity of cement milk is increased due to the needle-shape, so that air bubbles are hardly released, resulting in a cement molded body in which air bubbles remain.

From the above, it has been found that cement milk obtained by using the calcium-based carbonate compound of Example exhibits fluidity comparable to that of a blank product even when the content of the calcium-based carbonate compound is increased, and exhibits excellent compressive strength when formed into a cement molded body.

## Claims

1. A cube-shaped calcium-based carbonate compound, having:
- a phosphorus atom content of 1,000 ppm or less; and
- a sulfur atom content of 100 ppm or more.

2. The calcium-based carbonate compound according to claim 1,
having an average particle diameter measured by a laser diffraction method of 2 µm or more and 25 µm or less.

3. The calcium-based carbonate compound according to claim 1,
having a BET specific surface area of 0.3 m²/g or more and 3 m²/g or less.

4. The calcium-based carbonate compound according to claim 1,
having an apparent specific gravity of 1 g/mL or more and 2 g/mL or less.

5. The calcium-based carbonate compound according to claim 1,
having a P funnel-flowing down time of 7 seconds or more and 10 seconds or less.

6. The calcium-based carbonate compound according to claim 1,
wherein a content of magnesium is 1,000 ppm or more.

7. The calcium-based carbonate compound according to claim 1,
wherein the calcium-based carbonate compound is a synthetic calcium-based carbonate compound.

8. The calcium-based carbonate compound according to claim 1,
which is for an inorganic molded body.

9. An inorganic molded body,
comprising the calcium- based carbonate compound according to any one of claims 1 to 8.
